# EUROPEAN PATENT APPLICATION

(11) **EP 4 621 631 A1**
(43) Date of publication of application: **24.09.2025**
(21) Application number: 25164936.4
(22) Date of filing: 20.03.2025
(51) Int. Cl.: G06F 30/15, G06F 30/23, G06F 30/28, H04L 67/10

(54) **PREDICTING TURBOFAN ENGINE PROPERTIES**

(30) Priority: 20.03.2024 US 202418610600
(71) Applicant: Dassault Systemes Americas Corp., Waltham, MA 02451 (US)
(72) Inventor: CERIZZA, Davide, Tokyo, 106-0031 (JP); CASALINO, Damiano, 71272 Renningen (DE)
(74) Representative: Bandpay & Greuter

(57) **Abstract**

Embodiments determine physical properties of turbofan engines. An embodiment, in memory, obtains: (i) a computer-aided design (CAD) model representing a turbofan engine and (ii) an indication of flow conditions. In turn, a solver input file is automatically determined based on the CAD model and the indication of flow conditions. Responsively, a simulation of the turbofan engine, subject to the flow conditions, is performed using the determined solver input file. Results of the simulation indicate physical properties of the turbofan engine.

## Description

### BACKGROUND

A number of existing product and simulation systems are offered on the market for the design and simulation of objects, e.g., vehicles. Such systems typically employ computer aided design (CAD) and computer aided engineering (CAE) programs. These systems allow a user to construct, manipulate, and simulate complex three-dimensional models of objects or assemblies of objects. These CAD and CAE systems provide a model representation of objects, e.g., real-world objects, using edges or lines, in certain cases with faces. Lines, edges, faces, or polygons may be represented in various manners, e.g. nonuniform rational basis-splines (NURBS).

Such systems manage parts or assemblies of parts of modeled objects, which are mainly specifications of geometry. In particular, CAD files contain specifications, from which geometry is generated. From geometry, a three-dimensional CAD model or model representation is generated. Specifications, geometries, and CAD models/representations may be stored in a single CAD file or multiple CAD files. CAD or other such CAE systems include graphic tools for visually representing the modeled objects as represented in 3-dimensional space to designers; these tools are dedicated to the display of complex real-world objects. For example, an assembly may contain thousands of parts.

The advent of CAD and CAE systems allows for a wide range of representation possibilities, such as CAD models, for objects. Computer-based models may be programmed in such a way that the model has the properties (e.g., physical, material, or other physics-based) of the underlying real-world object or objects that the model represents. Example properties include stiffness (ratio of force to displacement), plasticity (irreversible strain), and viscosity (resistance to flow of one layer over an adjacent layer), amongst others. When a CAD or other such computer-based model as is known in the art, is programmed in such a way, it may be used to perform simulations of the object that the model represents. For example, a mesh-based model may be used to represent the interior cavity of a vehicle, the acoustic fluid surrounding a structure, or any number of real-world objects/systems. Moreover, CAD and CAE systems, along with computer-based models, can be utilized to simulate engineering systems, such as real-world physical systems, e.g., cars, airplanes, buildings, and bridges, amongst other examples. Further, CAE systems can be employed to simulate any variety and combination of behaviors of these physics based systems, such as noise and vibration.

### SUMMARY

Transportation and commuting is a burgeoning field of interest as populations continue to grow. A solution to modernize transportation is the utilization of turbofans, e.g., on flight vehicles. While turbofans provide a promising solution to modern transportation problems, to realize the full potential of turbofans and optimize the designs of turbofans, improved methods are needed to accurately determine properties, e.g., physical and operational properties, of said turbofans. Embodiments provide solutions to this problem.

An example embodiment is directed to a computer-implemented method for determining physical properties of a turbofan engine. According to an embodiment, the method begins, by a processor, obtaining, in memory coupled to the processor, (i) a computer-aided design (CAD) model representing a turbofan engine and (ii) an indication of flow conditions. In turn, a solver input file is automatically determined based on the CAD model and the indication of flow conditions. Responsively, a simulation is performed of the turbofan engine, subject to the flow conditions, using the determined solver input file. Results of the simulation indicate physical properties of the turbofan engine.

In an embodiment, the processor implementing the method is one of a plurality of processors supporting a global network platform service. In another embodiment, the CAD model and indication of flow conditions are obtained responsive to user input via a user interface of the platform service. According to an embodiment, the flow conditions include at least one of: freestream airspeed, fan rotation speed, and air temperature.

In yet another embodiment, the determined solver input file includes at least one of: a surface mesh, a measurement surface, and the indication of flow conditions. According to an embodiment, determining the solver input file includes at least one of: creating the surface mesh; and creating the measurement surface in the surface mesh. In an embodiment, creating the surface mesh includes analyzing the CAD model to determine geometrical parameters of at least one of: engine bounding box dimensions, nacelle leading and trailing edge position and shape, fan diameter, a number of fan blades, fan tip gap size, fan blades leading and trailing edge shape, outlet guide vane position, outlet guide vane leading and trailing edge shape, low pressure compressor stages positions (if present), low pressure compressor stages numbers of blades (if present), low pressure compressor stages blades leading and trailing edge shape (if present), and low pressure compressor rotor stages fan tip gap size (if present). As part of creating the surface mesh, embodiments can also identify parts of the turbofan engine based on respective names of components of the CAD model representing the identified parts. Embodiments can create the surface mesh based on at least one of the determined geometrical parameters and the identified parts.

According to an embodiment, performing the simulation includes generating a volumetric mesh based on the surface mesh and performing the simulation using the generated volumetric mesh. Further, embodiments can set local mesh resolution for at least one portion of the volumetric mesh and/or set volumetric mesh resolution regions based on dimensions and shape of an element in the surface mesh.

In another aspect, performing the simulation comprises determining simulation conditions. In one such embodiment, determining the simulation conditions includes at least one of: (i) determining a location of the measurement surface based on the indication of flow conditions and dimensions and shape of an element in the surface mesh, (ii) setting a length of the simulation based on a minimum frequency of interest, and (iii) setting a sampling rate based on a maximum frequency of interest.

According to an embodiment, performing the simulation includes at least one of: performing a computational fluid dynamics (CFD) simulation, e.g., a 3D CFD simulation, and a Lattice Boltzmann Method (LBM) simulation. Further, in an embodiment, the determined physical properties include at least one of: aerodynamic properties, thermal properties, and acoustic properties.

Embodiments may further include (i) generating a two-dimensional (2D) mesh from the solver input file and (ii) using the results of the simulation and the generated 2D mesh, performing a plurality of finite element method (FEM) simulations, each FEM simulation performed using respective flow conditions and a representation of a respective liner in the generated 2D mesh, to determine noise reduction properties of each respective liner.

Another embodiment is directed to a system for determining physical properties of a turbofan engine. In an embodiment, the system includes a processor and a memory with computer code instructions stored thereon, where the processor and memory, with the computer code instructions are configured to cause the system to implement any embodiments or combination of embodiments described herein. The implementation of any embodiments or combination of embodiments may comprise implementing a platform service configured to perform any embodiments or combination of embodiments described herein.

Yet another is directed to a system for determining physical properties of a turbofan engine, where the system includes a processor and a memory with computer code instructions stored thereon, the processor and memory, with the computer code instructions being configured to cause the system to implement a platform service configured to perform any embodiments or combination of embodiments described herein.

In another embodiment, a computer program product includes one or more non-transitory computer-readable storage devices, having computer-readable program instructions stored thereon. The instructions, when executed by a processor, cause an apparatus associated with the processor to implement any embodiments or combination of embodiments described herein.

Another embodiment includes an automated process to quickly produce a Digital Twin of a 3D turbofan engine, carry over fluid-dynamics simulations with different operating conditions, and post-process the results to assess aero-performance and far-field/ground noise levels of turbofans.

Another aspect includes automatically generating a 2D mesh from 3D engine geometry of a turbofan. This 2D mesh can, in turn, be used for a reduced order acoustic evaluation of the nacelle in presence of passive noise reduction devices like liners.

Yet another aspect includes extracting selected datasets (e.g., transient pressure fields) from a 3D turbofan engine simulation and using the selected datasets together with liner impedance characteristics to perform a series of reduced order acoustic simulations to quickly evaluate noise reduction that can be achieved by placing one or more passive liners within a turbofan (e.g., a nacelle of the turbofan).

Embodiments can pre-process engine geometries using a tool (i.e., a software component, application, etc.) that is able to read and automatically extract several geometrical characteristics of the engine. In an aspect, the tool is also configured to automatically generate measurement surfaces and other virtual entities employed to store data for use in far-field noise evaluation.

Embodiments can also implement and employ tools that can evaluate engine far-field noise using specific certification metrics and calculation methodologies.

Other aspects include computer program products tangibly stored on non-transitory computer readable media and computation systems such as computer systems and computer servers.

An example embodiment implements a workflow where, first, a user prepares engine geometry (e.g., a surface mesh) following a series of guidelines that specify a particular nomenclature to use for naming relevant engine surfaces. This nomenclature allows such an embodiment to automatically identify each engine section and generate additional mesh entities to specify volume mesh resolution and collect results. In addition, in yet another embodiment, a user provides one or multiple sets of flow conditions (operating conditions) for analyzing turbofans of interest.

With these two inputs (engine geometry with nomenclature compliant elements and flow conditions) a noise prediction process launches. In an embodiment, the process occurs in three phases: PHASE-1: the engine model (surface mesh) is analyzed and, together with the flow conditions provided by the user, a solver input file is generated; PHASE-2: simulations automatically run on a local or remote cluster and multiple simulations can run simultaneously (e.g., to evaluate different flow condition scenarios); and PHASE-3: simulation results obtained from PHASE-2 are processed and a dataset for each on the submitted cases is generated.

An implementation is executed on a cloud-based platform. In an embodiment, such a cloud-based platform includes an interactive environment to browse and compare datasets.

In a further aspect, an embodiment can generate a reduced model for noise reduction analyses for selected cases.

It is noted that embodiments of the methods, systems, and computer program products may be configured to implement any embodiments, or combination of embodiments, described herein.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 is a flowchart of a method for determining physical properties of a turbofan according to an embodiment.
FIG. 2 is a block diagram illustrating a platform as a service (PaaS) in which embodiments may be implemented.
FIG. 3 is a flow diagram illustrating a method for determining physical properties of turbofans according to an embodiment.
FIGs. 4A-C illustrate turbofan layouts that may be analyzed using embodiments.
FIGs. 5A-D illustrate turbofan geometries that may be utilized in embodiments.
FIGs. 6A-D, 7A-C, 8A-B, 9A-B, and 10A-B illustrate example turbofan properties determined using embodiments.
FIG. 11 illustrates a method of noise analysis according to an embodiment.
FIG. 12 is a simplified block diagram of a computer system embodiment for determining physical properties of turbofans.
FIG. 13 is a simplified block diagram of a computer network environment in which embodiments of the present invention may be implemented.

### DETAILED DESCRIPTION

A description of example embodiments follows.

Embodiments provide functionality to determine physical properties of turbofans. Amongst other examples, embodiments can provide community noise assessments of a turbofan engine via a fully automated process run on a supporting service platform.

A turbofan is an aircraft engine designed to operate at low-subsonic or transonic cruise speed. A turbofan engine generates thrust by accelerating a certain amount of air through the engine. Part of the ingested air undergoes a compression, combustion, and expansion (core flow) while another part of the ingested air is accelerated by the engine fan without combustion involved (bypass flow). Low emissions requirements in recent years drove new engine designs to increase the amount of bypass air, which caused larger fans to be utilized. The move to larger fans shifted the main noise sources from the jet to the engine fan and Outlet Guide Vane (OGV), which is mounted directly downstream of the fan to straighten the nacelle exit flow.

For this reason, amongst others, e.g., high costs and risks of physical testing and long Turn Around Time (TAT) for design iterations, being able to capture, through simulation, the complex interaction between the fan and OGV is crucial nowadays to accurately predict the noise generated by the engine and propagate the noise to the ground. This is especially true during takeoff and landing, for which regulations are in place that set precise noise thresholds which can severely limit the operability of the aircraft if not met.

In order to accurately determine the turbofan properties, e.g., noise, a simulation that reproduces the fan wake in its full time and spatial complexity is needed. Embodiments provide such functionality. In an example embodiment, a transient Computational Fluid Dynamics (CFD) solver is implemented that can handle realistic engine geometries. Further, low numerical dissipation is desirable for aeroacoustics analyses in order to reduce the numerical damping of pressure waves as much as possible. For this reason, embodiments can employ Lattice Boltzmann Method (LBM) based solvers for aeroacoustics analysis.

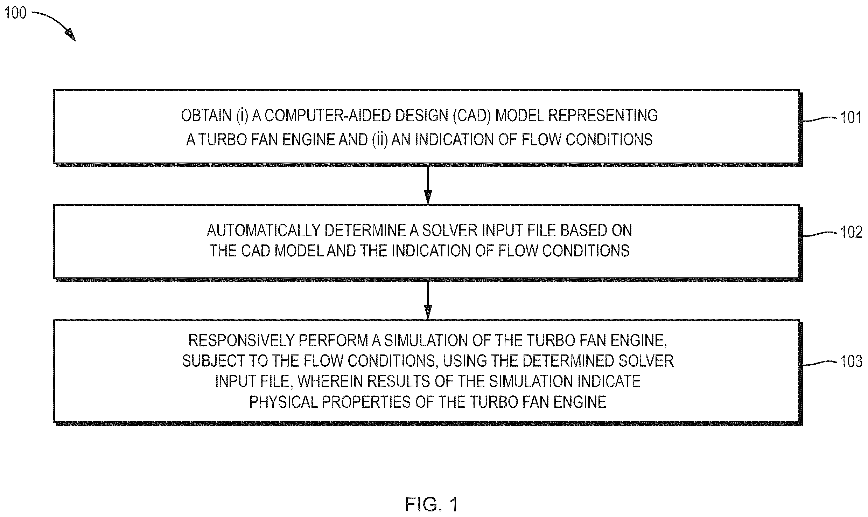

FIG. 1 is flowchart of an example method 100 for determining physical properties of a turbofan. The method 100 begins at step 110 by a processor, obtaining, in memory coupled to the processor, (i) a computer-aided design (CAD) model representing a turbofan engine and (ii) an indication of flow conditions. In turn, at step 102, a solver input file is automatically determined based on the CAD model and the indication of flow conditions. Responsively, at step 103, a simulation is performed of the turbofan engine, subject to the flow conditions, using the determined solver input file. In an embodiment, performing the simulation at step 103 includes submitting the simulation on a large datacenter using multiple processors organized in computational nodes that is able to handle the large memory required and produce results within a reasonable time frame. Results of the simulation performed at step 103 indicate physical properties of the turbofan engine.

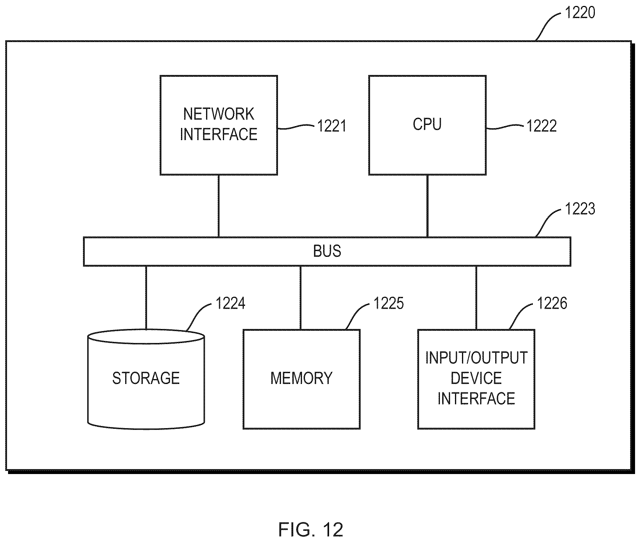

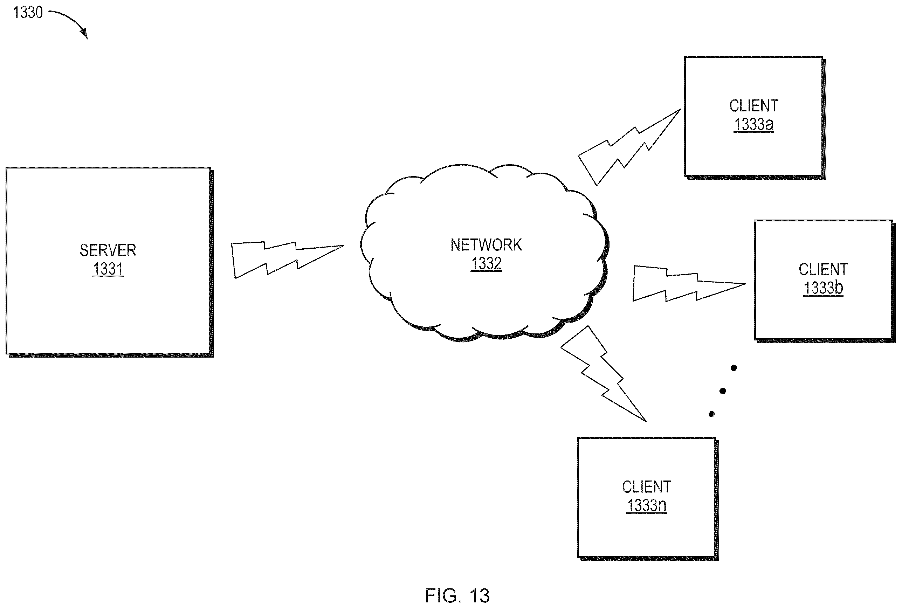

As noted, the method 100 is computer implemented and, as such, the functionality and effective operations, e.g., the steps 101-103, can be automatically implemented by one or more digital processors. Moreover, the method 100 can be implemented using any computer device or combination of computing devices known in the art. Amongst other examples, the method 100 can be implemented using the computer system 1220 described herein below in relation to FIG. 12 and the computer network environment 1330 described herein below in relation to FIG. 13.

Further, the method 100 can be implemented in a Platform as a Service (PaaS) environment. PaaS environments are becoming more popular as design spaces that can track and follow a product along its life cycle. Dassault Systemes' 3DEXPERIENCE^{®} platform is described herein as but one example of an environment able to provide the data management and processing automation tools to implement embodiments, e.g., method 100. Usage of this kind of environment (PaaS) can be crucial for users to be able to browse the large amount of data that makes up a given product's Digital Twin. A Digital Twin can be a unified dataset that includes geometrical, material, and collateral data for a given product (e.g., a turbofan) and, as such, a PaaS may be utilized to store, manage, process, and evaluate a digital twin using the method 100.

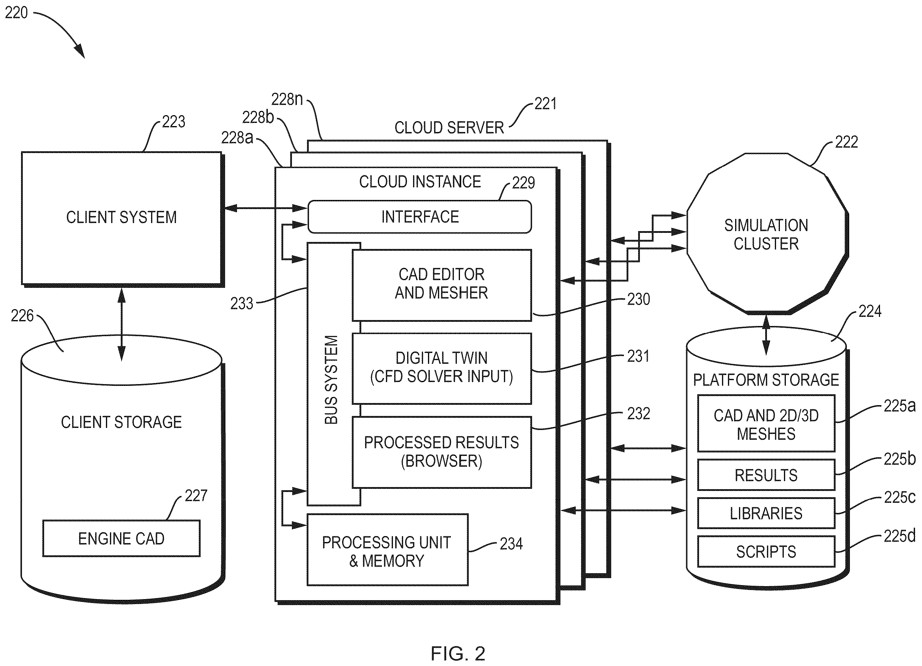

In a PaaS implemented embodiment of the method 100, the processor implementing the method 100 can be one of a plurality of processors supporting a global network (i.e., Internet) platform service. It is noted that embodiments are not limited to implementation on a global network and embodiments can be implemented on any network known to those of skill in the art, including local area networks (LANs) and wide area networks (WANs). Further still, the method 100 can be implemented in the PaaS environment 220 illustrated in FIG. 2. Further, an embodiment utilizes SIMULIA PowerFLOW^{®} by Applicant-Assignee Dassault Systemes Americas Corporation, for implementing an automatic workflow for turbofan property determination, e.g., noise assessment.

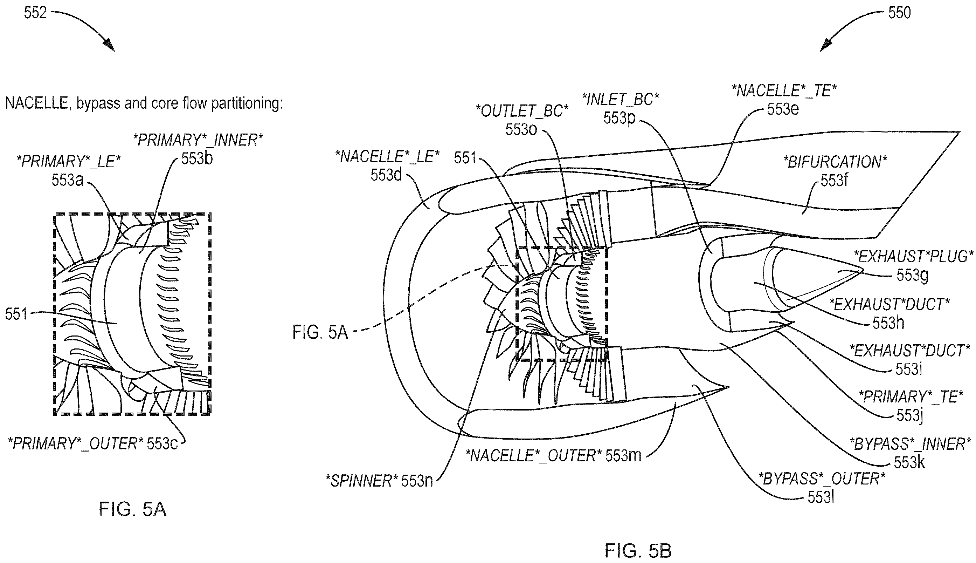

In an embodiment, the CAD model obtained at step 101 is a three-dimensional CAD model that includes all relevant parts of the turbofan. For instance, the model obtained at step 101 may include a fan mounted on a core part, outlet guide vane (OGV) and engine nacelle. Further, in embodiments, the CAD model obtained at step 101 may be any computer-based model known to those of skill in the art. As such, embodiments of the method 100 may perform additional processing to put the model received at step 101 into a desired form, e.g., in the form of a 3D CAD model. An example CAD model 550 that may obtained at step 101 is described hereinbelow in relation to FIG. 5B. Further, in an embodiment, each element of the CAD model received at step 101 is named in accordance with a particular nomenclature. In such an embodiment, utilizing this nomenclature enables each engine section to be automatically identified.

The indication of flow conditions obtained at step 101 may be in any form that can be processed and identified by the computing device implementing the method 100. The indication received at step 101 may indicate any flow conditions known to those of skill in the art. For example, according to an embodiment, the flow conditions include at least one of: freestream airspeed, fan rotation speed, and air temperature.

Further, in an embodiment, the CAD model and flow conditions are obtained at step 101 responsive to user input via a user interface, e.g., of a platform service in which the method 100 is being implemented.

To automatically determine a solver input file at step 102 based on the CAD model and indication of flow conditions, an embodiment determines a surface mesh of the CAD model (obtained at step 101) and determines the solver input file based on the determined surface mesh. In an embodiment, the surface mesh is generated from the CAD almost automatically (surface mesh in generally refined where high curvature surfaces are found). The solver input file includes definition of regions where a volume mesh (which can be generated at step 103 as part of performing the simulation) is refined based on flow conditions and engine part locations/dimensions and shapes. In an embodiment where a volume mesh is generated at step 103 based on the solver input file, the volume mesh is generated automatically when the simulation is submitted.

According to an embodiment, the solver input file is determined at step 102 by generating a 3D computational mesh in a completely autonomous way. Further, in an embodiment, the solver input file contains data which includes the turbofan surface mesh and the flow conditions specified. An embodiment of the method 100 determines properties of the solver input file based on characteristics of the turbofan engine model obtained at step 101. To implement such functionality, an embodiment analyzes geometry of the model, e.g., gap between nacelle and fan, and from the analysis sets parameters of the simulation, e.g., minimum resolution. Flow conditions can also be used to derive modifications to the model, e.g., analyze different operating conditions like approach, takeoff and cruise. In another embodiment, received data, e.g., data obtained at step 101, includes frequency range of interest and this data is used to set the length of the simulations in the solver input file. Similarly, max frequency of interest can be used to specify the sampling frequency of simulation results.

In yet another embodiment, the solver input file determined at step 102 includes at least one of: a surface mesh, a measurement surface, and the indication of flow conditions. According to such an embodiment, determining the solver input file at step 102 can include creating the surface mesh and/or creating the measurement surface in the surface mesh. In an embodiment, creating the surface mesh includes analyzing the CAD model (obtained at step 101) to determine geometrical parameters. According to an embodiment, the determined geometrical parameters can include at least one of: engine bounding box dimensions, nacelle leading and trailing edge position and shape, fan diameter, a number of fan blades, fan tip gap size, fan blades leading and trailing edge shape, outlet guide vane position, outlet guide vane leading and trailing edge shape, low pressure compressor stages positions (if present), low pressure compressor stages numbers of blades (if present), low pressure compressor stages blades leading and trailing edge shape (if present), and low pressure compressor rotor stages fan tip gap size (if present). From the determined geometrical parameters several simulation and post-processing parameters can be defined, for instance, the engine bounding box can define the size of the measurement surface used to calculate the far-field noise, the fan tip gap can set the minimum resolution of the 3D volumetric mesh (automatically generated from the input file when the 3D simulation is submitted), fan and outlet guide vane position and shape can define the measurement surfaces used to obtain stage performance and flow characteristics, the number of fan blades can define the Blade Passing Frequency (BPF) of the turbofan, and the number of blades of the fan and compressor (if present) can define the time sampling used to generate phase locked averages of flow properties. As part of creating the surface mesh, embodiments of the method 100 can also identify parts of the turbofan engine based on respective names of components of the CAD model (received at step 101) representing the identified parts. In turn, from these identified parts and/or the determined geometrical parameters, a surface mesh is generated. This surface mesh can be generated by setting a spatial tolerance to be respected that measures the distance from each surface mesh element from the original CAD surface. This generates a surface mesh that is locally more refined where high surface curvature is found. Once the solver input file is generated, simulation is submitted and a 3D volumetric mesh can be automatically generated from the surface mesh and simulation setup. When creating the input file, embodiments of the method 100 can also set local mesh resolution for at least one portion of the computational domain.

According to an embodiment of the method 100, performing the simulation at step 103 includes at least one of: performing a computational fluid dynamics (CFD) simulation and a Lattice Boltzmann Method (LBM) simulation.

According to an embodiment, performing the simulation at step 103 includes generating a volumetric mesh based on the surface mesh and performing the simulation using the generated volumetric mesh. Further, embodiments can set local mesh resolution for at least one portion of the volumetric mesh and set volumetric mesh resolution regions based on dimensions and shape of an element in the surface mesh.

In another aspect, performing the simulation at step 103 comprises determining simulation conditions. In one such embodiment, determining the simulation conditions includes at least one of: determining a location of a measurement surface based on the indication of flow conditions and dimensions and shape of an element in the surface mesh, e.g., engine part size and shape (engine stage inflow and outflow cross planes can be defined based on fan and outlet guide vane position and blade shape), setting a length of the simulation based on a minimum frequency of interest (simulation length can be defined by the number of cycles performed for the minimum frequency of interest), and setting a sampling rate based on a maximum frequency of interest (minimum number of points along the minimum wavelength of interest).

Embodiments of the method 100 may determine, at step 103, any physical properties of the turbofan known to those of skill in the art. For example, according to an embodiment, the determined physical properties include at least one of: aerodynamic properties, thermal properties, and acoustic properties.

Embodiments of the method 100 can also be utilized to evaluate noise reduction in turbofans through the use of aeroacoustic liners. Aeroacoustic liners are passive devices largely used to reduce the noise generated by the engine fan. Aeroacoustic liners are made up, in their most basic layout, by a series of hollow cells covered by a perforated plate that absorbs and reduces the pressure fluctuations generated by the engine fan, which are directly responsible for its noise footprint. Liners are usually placed along the nacelle intake section (upstream of the fan), in between the fan and OGV and downstream of the OGV. In one such example embodiment of the method 100 a two-dimensional (2D) mesh is generated from the solver input file (determined at step 102). Such an embodiment may then utilize the results of the simulation (from step 103) and the generated 2D mesh, to perform a plurality of finite element method (FEM) simulations. Each FEM simulation is performed using respective flow conditions and a representation of a respective liner in the generated 2D mesh. As such, performing the FEM simulations determines noise reduction properties of each respective liner subject to the respective flow conditions. These results can then be used to manufacture turbofans and liners that meet, for example, noise requirements.

FIG. 2 is a block diagram illustrating a PaaS 220 in which embodiments, e.g., methods 100 and 330 described herein, may be implemented. The platform 220 is a cloud platform that can be utilized to conduct the simulation of turbofan engines as described herein. Descriptions herein refer to the PaaS 220 being a Dassault Systemes 3DXPERIENCE^{®} platform, but PaaS embodiments are not limited to being implemented using the 3DXPERIENCE^{®} platform and, instead, embodiments can be implemented using any PaaS known to those of skill in the art.

The platform, i.e., system 220, is based on a client-server or cloud based architecture and includes a cloud server 221 connected to a massively parallel computing cluster 222 (which can be stand alone or cloud-based) and a client system 223. The computing cluster 222 is communicatively coupled to platform storage 224 that is used to store the data and software utilized by the cluster 222. Amongst other examples, the platform storage 224 includes CAD and 2D/3D mesh data 225a, result data 225b, libraries 225c, and scripts 225d. Similarly, the client system 223 is communicatively coupled to client storage 226. The client storage 226 stores turbofan engine CAD data 227.

The cloud server 221 may include multiple instances 228a-n, each with a user interface 229, data/tools (CAD editor and mesher tool 230, digital twin, e.g., CFD solver input, 231, processed results 232), a bus system 233, and a processing unit with local memory, collectively 234. According to an embodiment, the tools and data 230-232 are available to a user of the client system 223 via interface 229 and bus 233. Processing and memory for providing accessing and implementing the tools is provided by the processing unit 234.

In operation, a user at client system 223 accesses a CAD model 227 (stored on storage 226) for a turbofan of interest and provides the CAD model 227 to the cloud instance 228a via the interface 229. The user, via the interface 229, prepares and submits a simulation, e.g., an aero-acoustic simulation, in the form of digital twin, i.e., solver input file 231. In an embodiment, the simulation file 231 is prepared and submitted by modifying a series of flow parameters via the interface 229. Flow parameters for the simulation can be set via the interface 229 and are stored as part of the digital twin (i.e., CFD input file) 231 via the bus 233. In addition to the parameters, the engine digital twin 231 includes a CAD file containing a digital representation of the entire engine (from CAD model 227) uploaded from the client 223 and processed within the instance 228a. This processing can include editing the CAD model 227 and/or creating a mesh for the CAD model 227 using editing and meshing tools 230. As part of preparing and submitting the simulation, (e.g., during pre-processing, i.e., PHASE-1 as described herein), the engine model (227) can be analyzed by one or more geometry preparation scripts 225d that extract a series of geometrical parameters used for the simulation setup (engine size, fan blade numbers, fan tip/shroud gap size, etc.). At the same time, post-processing parameters can be prepared and set to default values. The user, if willing to, can modify these parameters to customize the post-processing based on the user's needs via interface 229.

Once the digital twin is prepared, the CFD input file 231 is provided to the cluster 222 that performs the simulation. To implement such functionality the cluster 222 is driven by cloud instance 228a and accesses platform storage 224 that stores 2D and/or 3D meshes 225a, coordinate systems, and libraries 225c, to conduct simulations using any known computational technique such as CFD or LBM. The simulation (e.g., PHASE-2 as described herein) can be for various purposes such as, aero-acoustics, estimating the aerodynamic and thermal performance, the acoustic noise footprint, or the impact of a noise reduction device installed inside the engine nacelle. Results 225b of the simulation indicate physical properties of the turbofan engine represented by the CAD model 227.

In an embodiment, once the simulation is run, a post-processing script 225d can launch automatically (e.g., during PHASE-3 as described herein) from instance 228a to generate results 225b (e.g., plots and images) based on selections made during pre-processing. The processed datasets (results 225b) can be stored in platform storage 224. The user can browse the processed results via the interface 229 by using visualization tools implemented by the processed results browser 232.

Further, according to an embodiment, post-processing can include collecting pressure field data on fan intake and OGV outlet surfaces and storing the pressure field data as parts of the results 225b after projecting the time domain fields in the respective radial and azimuthal mode components in the frequency domain.

Moreover, in an embodiment of the platform 220, a script 225d runs in processing unit 234 that accesses the geometrical data in 231 to automatically generate a 2D mesh that represents a vertical cut of the 3D engine (half geometry is considered here). In such an embodiment, part of the nacelle internal surface can be set as liner. Such a 2D mesh is stored with data 225a and can be used to build a reduced model to evaluate noise reduction capabilities of the liner when mounted in/on the engine. Such an embodiment can model the liner in a 2.5D simulation for the pressure azimuthal modes in the frequency domain. This implementation can utilize the 2D mesh previously generated from the 3D engine mesh and a FEM solver (e.g., OptydB_gfd FEM solver by Applicant-Assignee Dassault Systemes Americas Corporation) that can set a pressure dataset previously collected from the 3D simulation as a forcing term and calculate pressure fluctuations in the far-field generated by the engine with a lined nacelle. In an embodiment, an automated script 225d stored in platform storage 224 is launched by the instance 228a and runs multiple FEM simulations for different frequencies and fan pressure boundary conditions (azimuthal/radial modes). According to an embodiment, only engine cut-on modes are used. A second script 225d stored in platform storage 224 is run by instances 228a-n and collect far-field noise results and generates plots showing noise level for an entire frequency domain of interest.

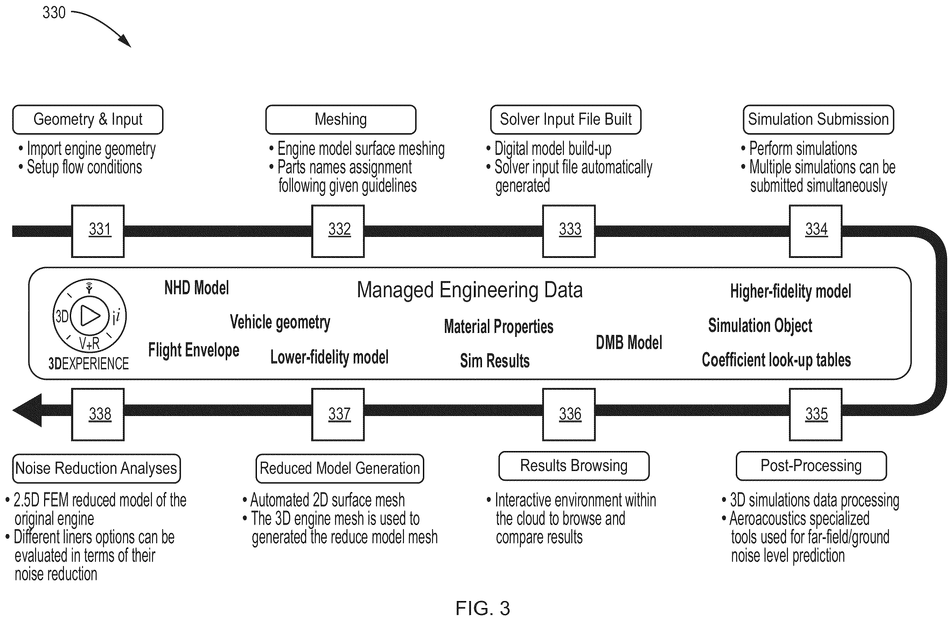

FIG. 3 is a flow diagram illustrating a method 330 for determining physical properties of turbofans according to an embodiment. In FIG. 3, the process 330 is presented with the details of each processing step (e.g., steps 331-338). Amongst other examples, the process 330 can be implemented in the platform 220 described hereinabove in relation to FIG. 2.

The process 330 begins at step 331 with geometry and input data. More specifically, at step 331 geometry of the turbofan engine is obtained, e.g., via user input, and flow-conditions are set-up. Table 1 below shows input data that may be obtained at step 331 of the process 330. These parameters can be set within a cloud platform Graphical User Interface (GUI).

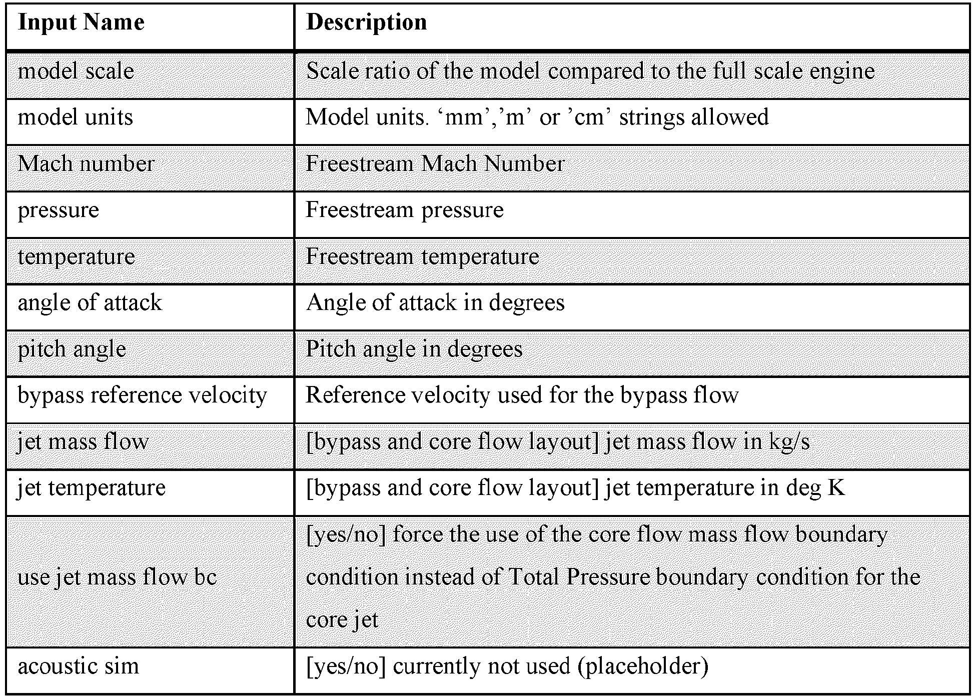

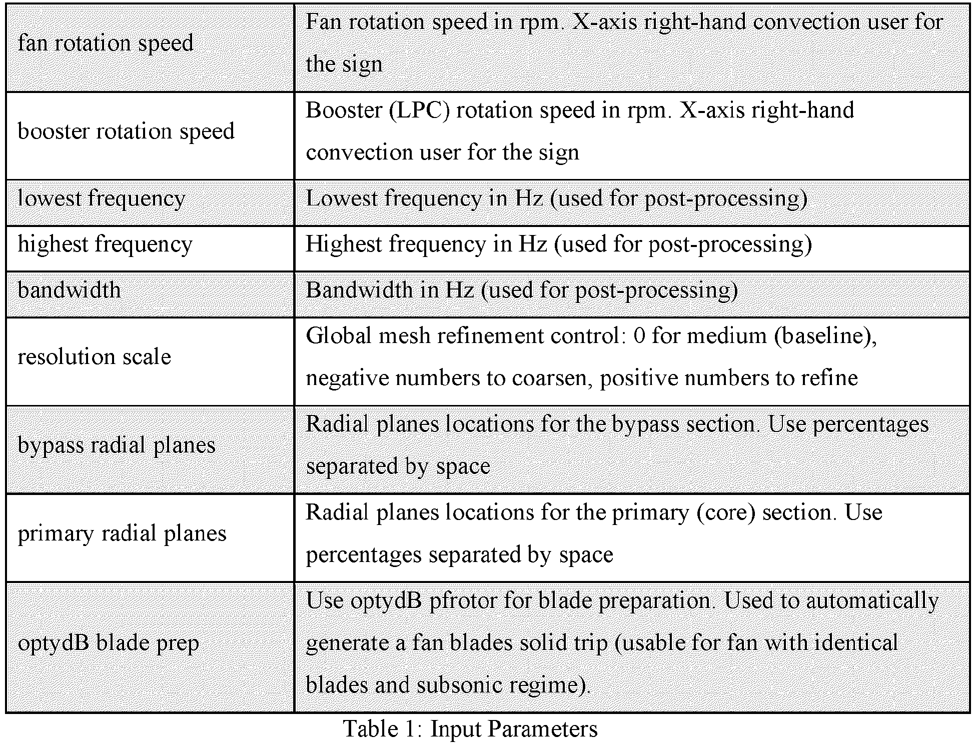

To continue, at step 332, the geometry obtained at step 331 is processed and, therefrom, a surface mesh of the turbofan engine is created and, in the mesh, part names are assigned in accordance with guidelines. Further details regarding meshing and naming are described hereinbelow in relation to FIGs. 5A-D. To continue, at step 333, a solver input file is automatically generated using the flow conditions and created surface mesh. According to an embodiment, the solver input file contains the information about flow conditions (e.g., all necessary information), the surface mesh of the engine, measurement surfaces, and volumetric mesh resolution controls. The solver input file generated at step 333 is then used at step 334 to perform one or more simulations of the turbofan engine. In embodiments, multiple simulations can be performed simultaneously to, for example, identify characteristics of turbofans with different geometries and/or identify turbofan characteristics subject to different flow conditions. At step 335 post-processing is performed on results from the simulation(s) performed at step 334. The post-processing at step 335 can include aero and thermal data processing and aeroacoustics processing. Amongst other examples, the aeroacoustics processing can utilize specialized tools (e.g., software tools) that determine far-field/ground noise levels. Table 2 below lists possible input parameters obtained at step 335 for conducting the post-processing. These parameters can be set by users, e.g., within a cloud platform GUI.

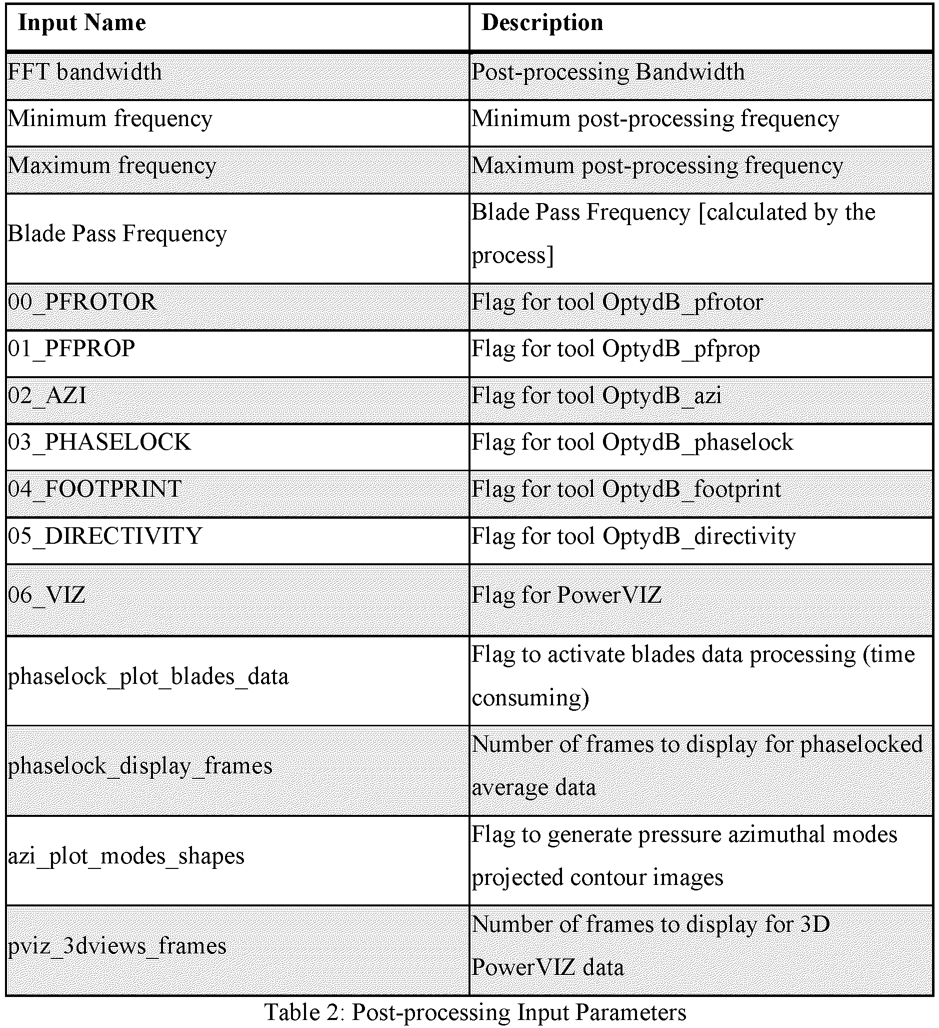

At step 336 user(s) can browse results of the simulation (334) and post-processing (335). The browsing can be provided via an interactive environment within a cloud-based implementation that facilitates user data browsing and comparison.

The method 330 can implement additional functionality at step 337 by, first, generating a reduced model. Specifically, at step 337 a 2D surface mesh (i.e., reduced model mesh) is automatically generated using the engine surface mesh. The 2.5D FEM reduced model of the original engine (from step 331) is used at step 338 to evaluate different liner options and the effect of the liners on noise reduction.

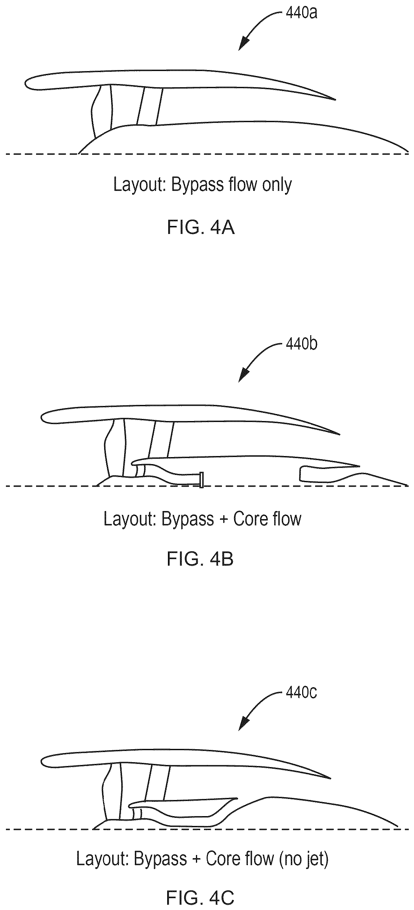

Embodiments can be used to evaluate any variety of turbofan engines known to those of skill in the art. FIGs. 4A-C illustrate example turbofan engine layouts that can be evaluated using embodiments. Layout 440a illustrated in FIG. 4A is a bypass only flow layout and does not include core flow. Layout 440b in FIG. 4B includes bypass and core flow. It is noted that in an embodiment core flow combustion, High Pressure Compressor (HPC), mixing and combustion chamber and turbine sections are not modeled because they are typically considered secondary for community noise assessment and very expensive in terms of computational resources. Layout 440c in FIG. 4C is a variation of layout 440b where the core flow merges with the bypass. The layout 440c is representative of an engine prototype used in testing.

FIGs. 5A-D illustrate example engine CAD geometry utilized in embodiments. For example, the CAD engine geometry illustrated in FIGs. 5A-D may be received at step 101 of the method 100 described hereinabove in relation to FIG. 1 and, similarly, may be received at step 331 of the method 330 described hereinabove in relation to FIG. 3. According to an embodiment, the CAD model illustrated in FIGs. 5A-D is prepared locally at a client side and then uploaded to a cloud platform executing an embodiment.

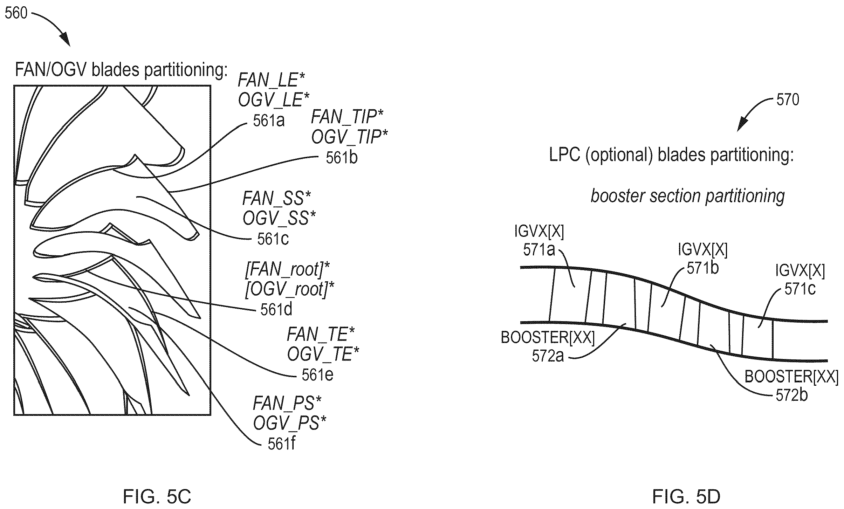

FIG. 5B illustrates a turbofan model 550 nacelle, bypass, and core portion. FIG. 5A is a zoomed-in view 552 of the core section portion 551 of the turbofan 550. In FIGs. 5A and 5B each portion of the engine has a particular name 553a-p, specifically,
*PRIMARY* _LE* (553a), *PRIMARY*_inner*(553b), *PRIMARY*_outer*(553c),
*NACELLE* _LE*(553d), *NACELLE* _TE*(553e), *BIFURCATION*(553f),
*exhaust*plug*(553g), *exhaust*duct*(553h), *exhaust*duct*(553i),
*PRIMARY*_TE*(553j), *BYPASS*_inner*(553k), *BYPASS*_outer*(553l),
*NACELLE* _outer*(553m), *SPINNER*(553n), *outlet_BC*(553o), and
*inlet_BC*(553p), respectively. Similarly, FIG. 5C illustrates the turbofan and outlet guide vane blades where portions of blades are named 561a-f in accordance with a predefined nomenclature, specifically FAN_LE* or OGV_LE* (561a), FAN_TIP* or OGV_TIP* (561b), FAN_SS* or OGV_SS* (561c), FAN_root* or OGV_root* (561d), FAN_TE* or OGV_TE* (561e), and FAN_PS* or OGV_PS* (561f). Likewise, FIG. 5D illustrates a Low Pressure Compressor (LPC) 570 where portions are named 571a-c (IGVX[X]) and 572a-b (BOOSTERX[X]). For the LPC 570 every stage is identified (named) with a different number X[X] and the guide vane stage (stator) portions 571a-c are named IGVX[X]* and the rotor stage portions 572a-b are named BOOSTERX[X]*. Further, partitions of the blade 570 can also be identified using the nomenclature 561a-f (*_LE*, *_TE*, *_root*, *_TIP*, *_SS*, and *_PS* utilized to name portions of the blades 560.

In FIGs. 5A-D parts of the turbofan engine are named 553a-p, 561a-f, 571a-c, and 572a-b in accordance with a pre-set nomenclature that is dictated by the computer code instructions executing embodiments. In this way, the computer code instructions executing embodiments can identify particular portions of the model and determine characteristics of those portions for purposes of executing the method, e.g., so as to automatically create the solver input file. In FIGs. 5A-D, asterisks (meta-characters) specify portions of surface names that can be arbitrarily added/changed.

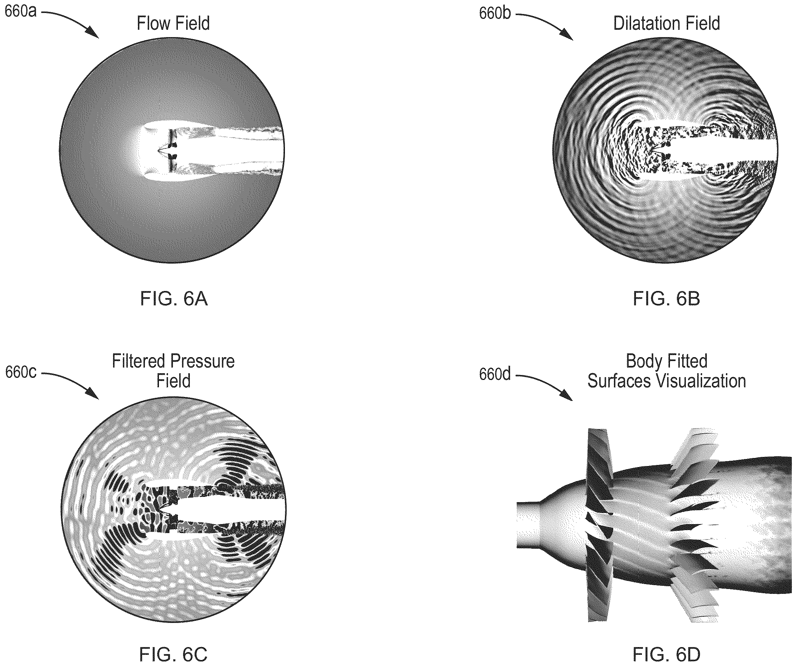

FIGs. 6A-D, 7A-C, 8A-B, 9A-B, and 10A-B illustrate example results obtained by embodiments. According to an embodiment, the results illustrated in FIGs. 6A-D, 7A-C, 8A-B, 9A-B, and 10A-B are generated using respective post-processing tools the names of which are provided below. In an embodiment, these tools are used to post-process results from the embodiments described herein, e.g., processing the simulation results from step 103.

FIGs. 6A-D illustrate flow field visualizations 660a-d determined using a PowerVIZ tool. In FIGs. 6A-D different shading and/or color-coding is used to indicate values of the depicted data. FIGs. 6A and 6B are surface contour images that show flow variables. Specifically, FIG. 6A illustrates the flow field 660a through a turbofan engine and FIG. 6B illustrates a dilation field 660b. Additionally, FIG. 6C shows processed results for filtered pressure field 660c to visually indicate directivity of noise propagation for selected frequencies (usually the fan Blade Passing Frequency and multiples of it). FIG. 6D is a visualization 660d of body fitted surfaces.

An embodiment generates radial and cross surfaces on which flow data can be displayed, e.g., in PHASE-3. Cross planes show flow parameters on planes normal to coordinate axes. Radial surfaces show flow parameters on a series of circular surfaces placed at radial positions and can be used to analyze flow behavior through the engine stages at different blade span locations (specific blade span locations of interest can be specified by users in PHASE-1).

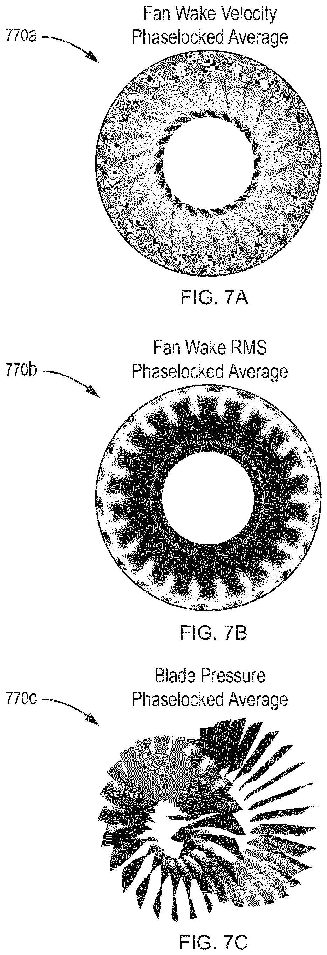

FIGs. 7A-C illustrate bypass/core flow phase-locked data obtained using a OptydB_phaselock tool. In FIGs. 7A-C different shading and/or color-coding is used to indicate values of the depicted data. FIG. 7A is a visualization 770a of phaselocked average fan wake velocity. FIG. 7B is a visualization 770b of phaselocked average fan wake velocity fluctuations root mean square (RMS) and FIG. 7A presents a visualization 770c of phaselocked average blade pressure. The visualizations 770a-c show results for both the engine bypass and core sections, where flow variables are time-averaged for the same fan angular position providing an average wake flow image. This is available before and after each bladed stage (fan, OGV, Low Pressure Compressor (LPC) rotor/stator stages if present). Additionally, blade surface data can also be processed in a similar way, providing time-averaged 3D blade load contours and 2D plots collected at different blade span locations. This permits to analyze each blade load distribution individually.

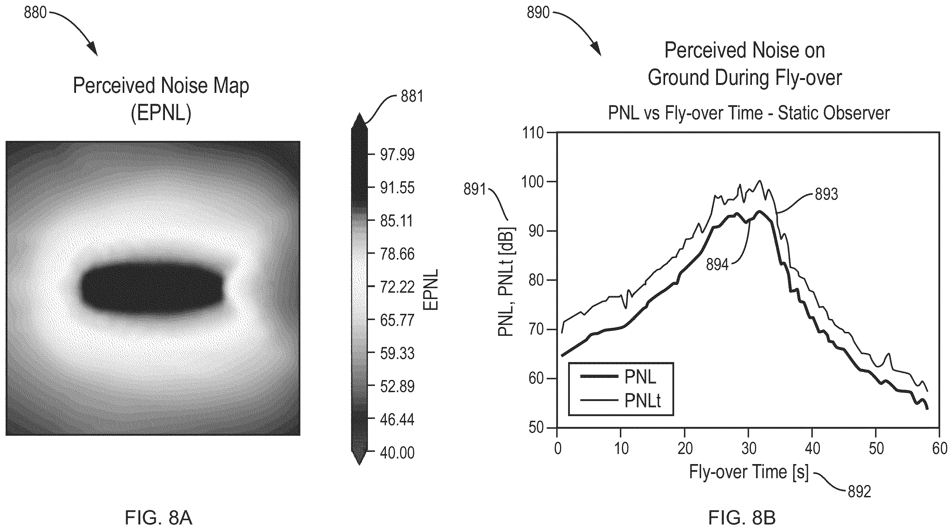

FIGs. 8A-B illustrate noise footprint data obtained using a OptydB_footprint tool. FIG. 8A is a map 880 showing effective perceived noise level (EPNL) where the color/shading indicates EPNL in accordance with the legend 881. FIG. 8B is a plot 890 of perceived noise on ground during fly-over 891 versus fly-over time 892. The plot 890 includes data of Perceived Noise Level (PNL) 894 and PNLt (tone corrected PNL) 893. According to an embodiment, far-field noise perceived on the ground is calculated by propagating near-field pressure fluctuations to the far-field via Ffowcs Williams-Hawking (FW-H) method (e.g., using Farassat 1A formulation). From this, images showing 2D noise footprint (perceived noise on the ground as a map e.g., 880) for a given flight maneuver (approach by default, but custom engine trajectories can be specified by users) can be generated. This can provide, for example, direct information on the operability of the engine at a given location when superimposing the generated noise map to an actual airport satellite map with similar scale. In an embodiment, noise levels are provided in terms Overall Sound Pressure Level (OASPL), Perceived Noise Level (PNL) and Effective Perceived Noise Level (EPNL).

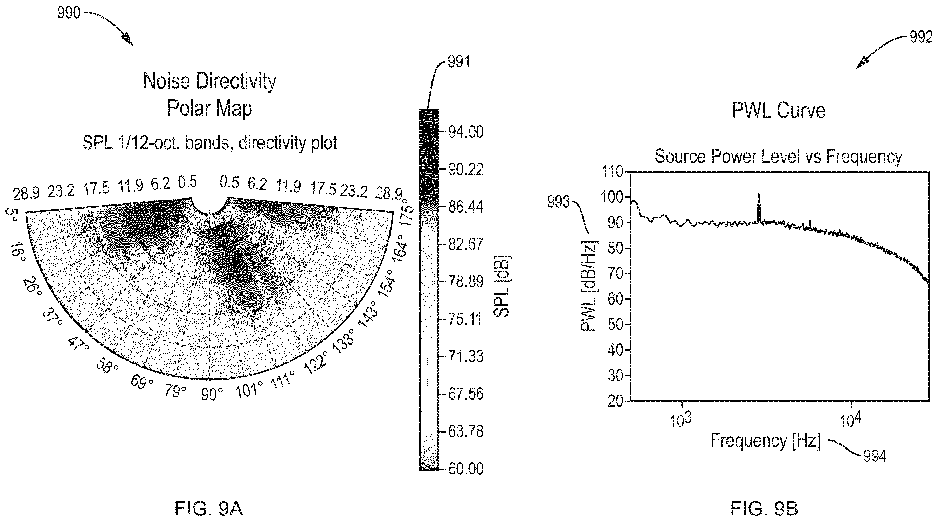

FIGs. 9A-B illustrate noise directivity data obtained using a OptydB_directivity tool. FIG. 9A is a noise directivity polar map 990 where the color/shading indicates noise directivity in accordance with the legend 991. FIG. 9B is a plot 993 of power watt level 993 (i.e., source power level) in dB/Hz versus frequency 994 in hz. In an embodiment, noise radiated by a turbofan engine is calculated and a polar directivity map, e.g., 990, is generated. A polar directivity map can highlight specific angles at which loudest noise components are propagated, and help identify regions of the engine that cause most of the noise. Contour plots can also be provided in terms of Sound Pressure Level (SPL) in two different bands: 3/8 and 1/12 octave bands. Additionally, engine Power Watt Level (PWL) can also be provided to quickly compare different designs or flow conditions and rank them from the quietest to the loudest.

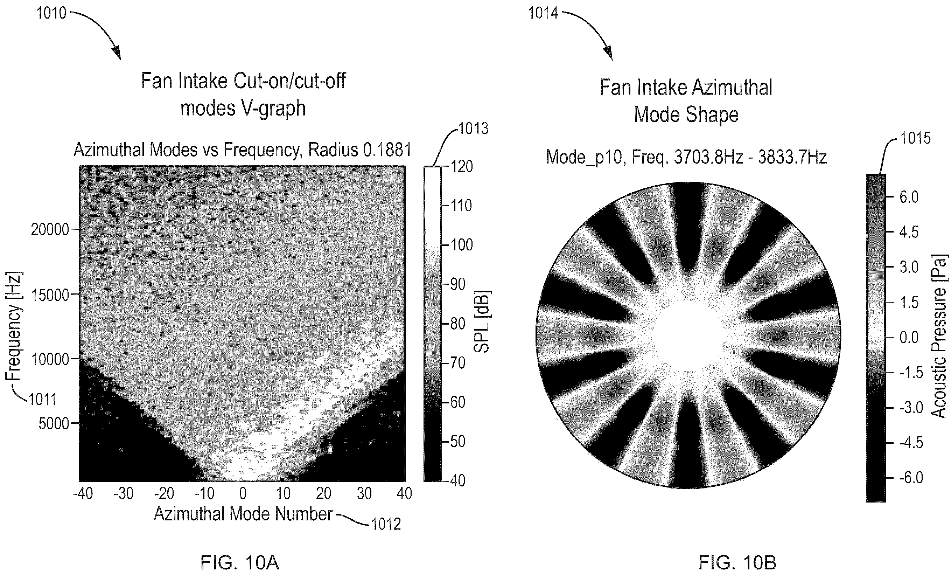

FIGs. 10A-B illustrate intake/outflow duct mode analysis data obtained using a OptydB_azi tool according to an embodiment. FIG. 10A is a graph 1010 showing fan intake cut-on and cut-off modes in terms of frequency 1011 versus azimuthal mode number 1012 where color/shading is provided in accordance with the legend 1013. FIG. 10B is a fan intake azimuthal model shape plot 1014 in terms of acoustic pressure where color/shading in accordance with the legend 1015 indicates acoustic pressure. In an embodiment, pressure fields collected on the fan intake and OGV outflow planes are projected on their azimuthal and radial modes in the frequency domain to obtain a database that is used in the analysis of the nacelle acoustics in presence of a liner. Moreover, using this projected dataset contour, plots, e.g., 1010, showing engine cut-off/cut-on modes ranges can be generated. With these, users can quantitatively analyze the interaction between the fan wake and the OGV.

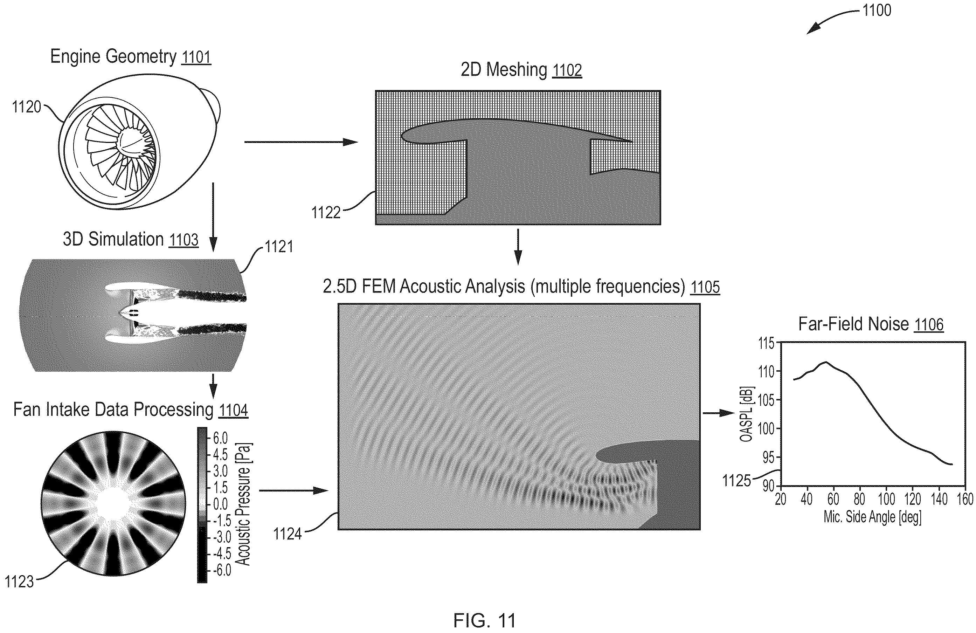

FIG. 11 illustrates a method 1100 of noise reduction analysis according to an embodiment. According to an embodiment, the method 1100 is a reduced method in that the method 1100 is reduced in terms of size (e.g., size of the mesh) and in the number of equations solved. This leads to a decrease in both memory and computational resources needed. In such an embodiment, the method 1100 is a simplification of the methods 100 and 330, and the method 1100 can provide fundamental evaluations of critical merit to drive design iterations, despite not producing the same amount of detailed results of the original methods, e.g., 100 and 330.

The method 1100 begins at step 1101 with obtaining an engine geometry 1120. This engine geometry 1120 is used at step 1103 to perform a 3D simulation and generate simulation results, e.g., plot 1121. Moreover, the engine geometry 1120 is meshed at step 1102, to create a 2D mesh 1122 of the turbofan engine. At step 1104, results from the simulation performed at step 1103 are further processed to determine fan intake characteristics, e.g., in the form of plot 1123. The method 1100 continues by using (i) the 2D mesh 1122 and (ii) fan intake data processing results, e.g., 1123, to perform 2.5D FEM acoustic analyses at step 1105. Results of the acoustic analyses at step 1105 can be plotted, e.g., plot 1124. Finally, far field noise is determined at step 1106. The determined far field noise can be plotted, e.g., as shown in plot 1125, and provided to a user.

In an embodiment, the method 1100 can prepare a 2.5D FEM reduced model for liner noise reduction evaluation. According to an embodiment, a duct modes analysis can be performed on 3D simulation 1103 results to express the pressure field in terms of azimuthal modes in the frequency domain. This pressure field data can be used to directly setup a reduced 2.5D model of the engine for further analysis. This simulation can produce a 2D contour of the pressure waves for a specified frequency. Several frequencies can be analyzed via multiple runs and results can be collected and combined to produce a far-field Power Watt Level (PWL) curve like plot 1125. Further, in embodiments, the user is able to submit the process for different liner properties or spatial extensions. This allows users to quickly run trade-offs to identify a configuration that will most likely produce the largest noise reduction for a given frequency range of interest.

An embodiment provides a fully automatic process for community noise assessment of a turbofan engine together with a scheme of support infrastructure used for execution of the process. In an embodiment, the process is divided into three phases: 1) generating a Digital Twin of the real engine; 2) running 3D high-fidelity CFD analysis; and 3) processing simulation results. The proposed methodology and infrastructure, according to an embodiment, allows for fully automated execution of the three aforementioned phases. Embodiments can run multiple simulations simultaneously. Each simulation can include modified engine geometries or the same engine for multiple operating conditions. Once 3D simulations are completed, results can be automatically processed and a readable dataset, accessible interactively within the system, can be produced. This allows users not only to quickly assess noise generated by a given engine, but also to identify possible design improvements, e.g., by running trade-off studies. Moreover, a smaller 2D model can be generated from a vertical cut of the original engine geometry and a reduced model for nacelle aeroacoustics analyses can be generated. This reduced model can be used to quickly analyze possible noise reduction achievable with a passive noise reduction device like a liner mounted inside the nacelle. The benefit of such an approach includes the capability to run shorter simulations and, therefore, analyze in a very short time, a multitude of liner placements and impedance values, which is something not feasible via physical testing.

An embodiment provides a computer implemented automated methodology for conducting flow simulations and community noise assessment of turbofan engines within a PaaS environment. Such an embodiment imports a file containing a digitized representation of a three-dimensional engine geometry and automatically identifies the different engine parts and generates a Digital Twin which can be simulated using a CFD software. The embodiment performs high-fidelity CFD simulations to compute aerodynamic and far-field noise characteristics for the turbofan engine. A dataset is generated by processing results of the CFD simulations. The data indicates key design merits and faults and pin-points regions of the model to be modified or re-designed. These identified problematic regions can be re-designed and, in turn, an improved real-world turbofan can be manufactured.

Embodiments can also generate a 2D reduced model of the original 3D engine to perform a trade-off analysis on the benefits of a liner mounted on the engine nacelle in terms of noise levels generated in the far-field.

An embodiment creates the digital twin by reading the original CAD engine geometry, generating a surface mesh and calculating sizes and locations of several engine parts together with characteristic geometrical parameters like fan diameter, number of blades, and fan tip gap size. Such an embodiment generates, from scratch, support entities that are used to define the computational volumetric mesh local size, measurements surfaces, etc. In turn, user specified input parameters are imported and the solver pre-processing software is managed by assigning the input parameters and launching and generating the solver input file.

Another example embodiment performs the CFD analyses using a scheduling system to submit single or multiple runs on a remote or local cluster and using a centralized storage that stores data generated by the 3D engine simulation for subsequent post-processing.

In an embodiment, performing post processing includes running a series of post-processing tools to generate a comprehensive acoustics and aero-dynamics dataset of each 3D simulation that has previously run and providing interactive access via a single interface to all datasets in an easy-to-browse environment that allows users to analyze simulation results and compare different runs.

In yet another embodiment, generating the 2D reduced model and performing the trade-off analysis includes extracting a vertical 2D cut of the original engine 3D geometry and generating a 2D mesh to be used for reduced model analysis. Such an embodiment extracts, from the processed 3D engine dataset, the projected pressure field on the fan intake and OGV outlet sections and, in turn, reads the simulation parameters list, the projected pressure fields, and a user specified liner impedance, and generates a reduced 2.5D FEM model for nacelle aeroacoustics analysis. To continue, a series of single frequency calculations of the reduced model can be run to cover a given frequency range of interest specified by the user. Generated noise is collected on a series of microphones placed in the far-field via FW-H method and generated data is collected and evaluated to determine far-field noise levels.

### Example Advantages

Embodiments provide the capability to conduct the simulation and noise evaluation process in an automatic way. Such functionality can be provided by the tools that have been selected to build this process and from the proposed methodology presented herein of how to combine the different datasets. In contrast, existing methods require users to (i) manually modify engine model regions to have particular mesh refinements (e.g., changing mesh resolution for a particular part), modify simulation characteristics (e.g., sampling rate based on frequency of interest), and manually create series of stages and surfaces to determine flow and measure flow properties.

Embodiments also provide a reduction in costs and time required to obtain an accurate engine noise prediction. This allows embodiments to identify design flaws. Further, embodiments can be used to evaluate noise reduction achievable by installing a passive noise reduction device (liner).

Being able to identify design flaws at the early stage of a turbofan engine design can avoid spending a large amount of time for expensive physical testing and reduce the risk of late stage fixes. Moreover, an early evaluation of the engine aero performance together with an estimation of its noise footprint can lead to a better aircraft design, with a more efficient engine and maximized operability. The implementation of noise reduction devices, like liners, can further extend the engine operability without limiting its performance (thrust). Due to the large number of liner design space parameters, reduced order models are very useful because they can be used to quickly iterate multiple solutions.

Embodiments can be used to digitally determine properties of real-world turbofans, e.g., for compliance purposes. Moreover, embodiments can be used to determine optimized turbofan designs and said designs can, in turn, be manufactured for real-world applications. To illustrate, an embodiment can determine a design flaw in a turbofan and, responsive to this identified flaw, the turbofan can be redesigned and manufactured for real-world use.

Further, embodiments can be used to improve existing turbofans. For instance, it may be determined that an existing turbofan does not meet noise regulations and, in turn, a CAD model of the turbofan can be created (e.g., through measuring the real-world turbofan) and this CAD model can be used in embodiments to determine design changes or implementation improvements, e.g., an improved liner, that can be used in the real-world to bring the turbofan into compliance.

### Computer Support

FIG. 12 is a simplified block diagram of a computer-based system 1220 that may be used to implement any variety of the embodiments of the present invention described herein. The system 1220 comprises a bus 1223. The bus 1223 serves as an interconnect between the various components of the system 1220. Connected to the bus 1223 is an input/output device interface 1226 for connecting various input and output devices such as a keyboard, mouse, display, speakers, etc. to the system 1220. A central processing unit (CPU) 1222 is connected to the bus 1223 and provides for the execution of computer instructions implementing embodiments, e.g., methods 100, 330, 1100, and system 220, etc. Memory 1225 provides volatile storage for data used for carrying out computer instructions implementing embodiments described herein, such as those embodiments previously described hereinabove. Storage 1224 provides non-volatile storage for software instructions, such as an operating system (not shown) and embodiment configurations, etc. The system 1220 also comprises a network interface 1221 for connecting to any variety of networks known in the art, including Wide Area Networks (WANs) and Local Area Networks (LANs).

It should be understood that the example embodiments described herein may be implemented in many different ways. In some instances, the various methods and systems described herein may each be implemented by a physical, virtual, or hybrid general purpose computer, such as the computer system 1220, or a computer network environment such as the computer environment 1330, described herein below in relation to FIG. 13. The computer system 1220 may be transformed into the systems that execute the methods (e.g., 100, 330, 1100) described herein, for example, by loading software instructions into either memory 1225 or non-volatile storage 1224 for execution by the CPU 1222. One of ordinary skill in the art should further understand that the system 1220 and its various components may be configured to carry out any embodiments or combination of embodiments described herein. Further, the system 1220 may implement the various embodiments described herein utilizing any combination of hardware, software, and firmware modules operatively coupled, internally, or externally, to the system 1220.

FIG. 13 illustrates a computer network environment 1330 in which embodiments may be implemented. In the computer network environment 1330, the server 1331 is linked through the communications network 1332 to the clients 1333a-n. The environment 1330 may be used to allow the clients 1333a-n, alone or in combination with the server 1331, to execute any of the embodiments described herein. For non-limiting example, computer network environment 1330 provides cloud computing embodiments, Software as a Service (SAAS) embodiments, and the like.

Embodiments or aspects thereof may be implemented in the form of hardware, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and thus, the data processors described herein are intended for purposes of illustration only and not as a limitation of the embodiments.

The teachings of all patents, published applications, and references cited herein are incorporated by reference in their entirety.

While example embodiments have been particularly shown and described, it will be understood by those skilled in the art that various changes in form and details may be made therein without departing from the scope of the embodiments encompassed by the appended claims.

For example, the foregoing description and details of embodiments in the figures reference Applicant-Assignee (Dassault Systemes Americas Corporation) and Dassault Systemes, tools and platforms, for purposes of illustration and not limitation. Other similar tools and platforms are suitable.

## Claims

1. A computer-implemented method for determining physical properties of a turbofan engine, the method comprising, by a processor:
in memory coupled to the processor, obtaining: i) a computer-aided design (CAD) model representing a turbofan engine and ii) an indication of flow conditions;
automatically determining a solver input file based on the CAD model and the indication of flow conditions; and
responsively performing a simulation of the turbofan engine, subject to the flow conditions, using the determined solver input file, wherein results of the simulation indicate physical properties of the turbofan engine.

2. The method of Claim 1 wherein the processor is one of a plurality of processors supporting a global network platform service.

3. The method of Claim 2 wherein the CAD model and indication of flow conditions are obtained responsive to user input via a user interface of the platform service.

4. The method of any one of Claims 1 to 3 wherein the flow conditions include at least one of: freestream airspeed, fan rotation speed, and air temperature.

5. The method of any one of Claims 1 to 4 wherein the determined solver input file includes at least one of: a surface mesh, a measurement surface, and the indication of flow conditions.

6. The method of Claim 5 wherein determining the solver input file includes at least one:
creating the surface mesh; and
creating the measurement surface in the surface mesh.

7. The method of Claim 6 wherein creating the surface mesh comprises at least one of:
analyzing the CAD model to determine geometrical parameters of at least one of: engine bounding box dimensions, nacelle leading and trailing edge position and shape, fan diameter, a number of fan blades, fan tip gap size, fan blades leading and trailing edge shape, outlet guide vane position, outlet guide vane leading and trailing edge shape, low pressure compressor stages positions, low pressure compressor stages numbers of blades, low pressure compressor stages blades leading and trailing edge shape, and low pressure compressor rotor stages fan tip gap size; and
identifying parts of the turbofan engine based on respective names of components of the CAD model representing the identified parts.

8. The method of Claim 7 further comprising:
creating the surface mesh based on at least one of: the determined geometrical parameters and the identified parts.

9. The method of any one of Claims 5 to 8 wherein performing the simulation comprises:
generating a volumetric mesh based on the surface mesh;
performing the simulation using the generated volumetric mesh; and, optionally, further comprising at least one of
setting local mesh resolution for at least one portion of the volumetric mesh; and
setting volumetric mesh resolution regions based on dimensions and shape of an element in the surface mesh.

10. The method of any one of Claims 5 to 9 wherein performing the simulation comprises:
determining simulation conditions and, optionally, wherein determining the simulation conditions includes at least one of:
determining a location of the measurement surface based on the indication of flow conditions and dimensions and shape of an element in the surface mesh;
setting a length of the simulation based on a minimum frequency of interest; and
setting a sampling rate based on a maximum frequency of interest.

11. The method of any one of Claims 1 to 10 wherein performing the simulation includes at least one of: performing a computational fluid dynamics (CFD) simulation and a Lattice Boltzmann Method (LBM) simulation.

12. The method of any one of Claims 1 to 11 wherein the determined physical properties include at least one of: aerodynamic properties, thermal properties, and acoustic properties.

13. The method of any one of Claims 1 to 12 further comprising:
generating a two-dimensional (2D) mesh from the solver input file; and
using the results of the simulation and the generated 2D mesh, performing a plurality of finite element method (FEM) simulations, each FEM simulation performed using respective flow conditions and a representation of a respective liner in the generated 2D mesh, to determine noise reduction properties of each respective liner.

14. A system for determining physical properties of a turbofan engine, the system comprising:
a processor; and
a memory having recorded thereon computer code instructions which, when executed by the system, cause the system to perform the method according to any one of Claims 1 to 13.

15. A system for determining physical properties of a turbofan engine, the system comprising:
a processor; and
a memory with computer code instructions stored thereon, the processor and memory, with the computer code instructions being configured to cause the system to implement a platform service configured to perform the method according to any one of Claims 1 to 13.

16. A computer program for determining physical properties of a turbofan engine, the computer program comprising instructions which, when the program is executed by a computer, cause the computer to carry out the method of any one of Claims 1 to 13.
